# EUROPÄISCHE PATENTSCHRIFT

(11) **EP 1 302 769 B1**
(45) Veröffentlichungstag und Bekanntmachung des Hinweises auf die Patenterteilung: **04.07.2007**
(21) Anmeldenummer: 02022750.0
(22) Anmeldetag: 11.10.2002
(51) Int. Cl.: G01N 27/90, G01B 11/02, G01N 29/04, G01N 29/14, G01N 29/26

(54) **Verfahren zur Qualitätsprüfung von Gussteilen mittels Wirbelstrom**
Method for checking the quality of cast pieces with eddy current testing
Procédé pour tester la qualité de pièces moulées par courants de Foucault

(30) Priorität: 15.10.2001 DE 10150563
(43) Veröffentlichungstag der Anmeldung: 16.04.2003
(73) Patentinhaber: Intermet Neunkirchen GmbH, 66539 Neunkirchen (DE)
(72) Erfinder: Folz, Heinrich L., Dipl.-Ing., 66440 Blieskastel (DE)
(74) Vertreter: Wieske, Thilo

(56) Entgegenhaltungen:
- EP-A- 0 315 887
- EP-A- 0 445 983
- WO-A-91/08476
- US-A- 4 584 746
- US-A- 5 670 879

## Beschreibung

Die Erfindung betrifft ein Verfahren zur Qualitätsprüfung von Gussteilen nach dem Oberbegriff des Patentanspruchs 1.

Der Anmelderin sind Verfahren zur Qualitätsprüfung von Gussteilen bekannt, bei denen eine Anregung mit Ultraschall erfolgt. Dazu muss ein Ultraschallgenerator auf dem Gussteil befestigt werden, um dieses mit Ultraschall anzuregen. Weiterhin muss ein Ultraschallaufnehmer angebracht sein, mit dem der resultierende Ultraschall aufgenommen wird. Ein solches Verfahren ist beispielsweise aus dem Buch: "Magnetische und magnetinduktive Werkstoffprüfung" 3. Auflage, erschienen im VEB Deutscher Verlag für die Grundstoffindustrie bekannt (siehe dort Seiten 263-273). Dort ist ebenfalls ein Wirbelstromprüfverfahren beschrieben, bei dem die zu prüfenden Teile das Wirbelstromfeld durchlaufen. Um lokal einzelne Bereich der zu prüfenden Bauteile zu untersuchen, ist dort beschrieben, dass die zu untersuchenden Teile zur Durchführung der Wirbelstromprüfung angehalten werden können.

Weiterhin sind der Anmelderin Verfahren zur Qualitätsprüfung von Gussteilen bekannt, bei dem an den ruhenden Teilen ein Magnetfeld erzeugt wird. Es werden dann die entstehenden Wirbelströme ausgewertet, um eine Qualitätsprüfung durchführen zu können.

Der vorliegenden Erfindung liegt die Aufgabe zugrunde, ein verbessertes Verfahren zur Qualitätsprüfung von Gussteilen vorzuschlagen. Dabei soll insbesondere die Zeitdauer verkürzt werden, die für einen Prüfvorgang benötigt wird.

Diese Aufgabe wird erfindungsgemäß nach Anspruch 1 gelöst, wonach die Wirbelstromprüfung durchgeführt wird, indem die Gussteile während der Wirbelstromprüfung durch ein Magnetfeld bewegt werden. Dabei wird bzw. werden zunächst ein als fehlerfrei erkanntes Teil oder mehrere als fehlerfrei erkannte Teile durch das Magnetfeld bewegt, wobei der Verlauf des bei diesem fehlerfreien Teil bzw. diesen fehlerfreien Teilen gemessenen Wirbelstromes erfasst wird. Nachfolgend wird ein zu prüfendes Teil durch das Magnetfeld bewegt, wobei der Verlauf des bei diesem zu prüfenden Teil gemessenen Wirbelstromes erfasst wird. Eine Fehlererkennung erfolgt, wenn der Verlauf des Wirbelstromes bei dem zu prüfenden Teil um mehr als einen Schwellwert von dem Verlauf des Wirbelstromes bei dem fehlerfreien Teil bzw. dem Verlauf der Wirbelströme bei den fehlerfreien Teilen abweicht. Zur Auswertung des Signals wird der Verlauf des Wirbelstromes bei dem fehlerfreien Teil bzw. den fehlerfreien Teilen wie auch bei dem zu prüfenden Teil Zeitabschnittsweise unterteilt, wobei die Prüfung auf die Abweichung jeweils Zeitabschnittsweise erfolgt.

Vorteilhaft müssen dabei die Teile während der Durchführung der Prüfung nicht ruhen bis die Prüfung abgeschlossen ist. Dies erweist sich in einem laufenden Produktionsprozess als vorteilhaft, weil dann die Prüfung vergleichsweise einfach in den Produktionsprozess integriert werden kann, ohne dass es wegen der Prüfung zu nennenswerten zeitlichen Verzögerungen kommt.

Indem die Teile durch das Magnetfeld hindurch bewegt werden, erfolgt auch keine lediglich lokale Prüfung. Während der Bewegung durch das Magnetfeld können verschiedene Bereiche des Teils der Wirbelstromprüfung unterzogen werden. Dadurch wird weiterhin vorteilhaft die Aussagekraft des Prüfergebnisses verbessert.

Bei der beschriebenen Vorgehensweise der Kalibrierung mittels eines fehlerfreien Teils oder mehrerer fehlerfreier Teile erweist es sich als vorteilhaft, dass es für die Auswertung nicht erforderlich ist, theoretische Überlegungen und Berechnungen über einen Sollverlauf des Wirbelstromes anzustellen. Dieser kann vielmehr in einfacher Weise durch eine Messung bei einem oder mehreren fehlerfreien Teil bzw. Teilen gewonnen werden.

Es ist in diesem Zusammenhang auch möglich, zunächst den Wirbelstromverlauf zu messen, wenn kein Teil auf dem Fördermittel liegt. Dieses Fördermittel kann selbst wegen metallischer Bestandteile einen eigenen Beitrag zum Wirbelstromverlauf liefern. Wenn dieses Fördermittel mehrere Förderpositionen aufweist, können an den einzelnen Förderpositionen unterschiedliche Beiträge des Fördermittels zum gemessenen Wirbelstrom vorliegen. Vorteilhaft wird also zu jeder Förderposition der Beitrag des Fördermittels zum Wirbelstromverlauf gemessen. Sowohl bei der Referenzmessung des fehlerfreien Teils bzw. der fehlerfreien Teile wie auch bei der Messung an dem zu prüfenden Teil kann dann der Beitrag des Fördermittels entsprechend der jeweiligen Förderposition zum Wirbelstromverlauf abgezogen werden. Die Genauigkeit der Prüfung kann dadurch verbessert werden. Dies gilt insbesondere, wenn mehrere Förderpositionen vorhanden sind, die gegebenenfalls unterschiedliche Beiträge zum Wirbelstromverlauf liefern.

Sofern mehrere fehlerfreie Teile verwendet werden, kann beispielsweise ein resultierender Verlauf des Wirbelstromes durch Mittelwertbildung bestimmt werden. Die Abweichungen des Verlaufs der Wirbelströme der einzelnen fehlerfreien Teile von dem resultierenden Mittelwert können wiederum als Maß für den Schwellwert verwendet werden. Der Verlauf des Wirbelstromes des zu prüfenden Teils kann dann mit dem resultierenden Verlauf verglichen werden, der durch die Mittelwertbildung gewonnen wurde.

Bei der Unterteilung in die Zeitabschnitte erweist es sich als vorteilhaft, dass der Verlauf des Wirbelstroms nicht lediglich pauschal betrachtet wird, indem beispielsweise der zeitliche Verlauf des Wirbelstroms aufintegriert wird. Weist das Teil an einer bestimmten Stelle einen Fehler auf, der eine Abweichung des Wirbelstroms während einer kurzen Zeitspanne des Durchlaufs des entsprechenden Teils durch das Magnetfeld mit sich bringt, so kann es bei einer pauschalen Auswertung wie beispielsweise dem Aufintegrieren dazu kommen, dass dieser Fehler bei der Gesamtbetrachtung nicht mehr feststellbar ist.

Insofern erweist sich die beschriebene Vorgehensweise als vorteilhaft, nach der der Wirbelstromverlauf Zeitabschnittsweise betrachtet wird. Bei der Betrachtung in den einzelnen Zeitabschnitten können Fehler besser erkannt werden, die sich nur in kürzeren Zeitabschnitten des Durchlaufs des entsprechenden Teils auswirken, weil das Teil beispielsweise einen lokal begrenzten Fehler aufweist. Vorteilhaft muss dazu aber das zu untersuchende Teil während des Prüfvorganges nicht angehalten werden.

Gemäß Anspruch 2 erfolgt ein als zusätzlicher Prüfschritt eine Schallprüfung, wobei erfindungsgemäß die Gussteile mit einem Anschlaghammer mit einer definierten Kraft an einer definierten Stelle des Gussteils angeschlagen werden und wobei der resultierende Klang mittels eines Mikrophons aufgenommen wird, das nicht mechanisch an das Gussteil angekoppelt ist.

Diese Vorgehensweise erweist sich als vorteilhaft gegenüber den bekannten Ultraschallprüfverfahren. Sowohl zur Anregung des Ultraschalls wie auch zur Messung des Ultraschalls können beispielsweise entsprechende Sensoren an das Teil mechanisch angekoppelt werden. Dazu muss eine spezielle Paste aufgetragen werden, die nach der Prüfung wieder entfernt werden muss. Dies erweist sich gegenüber der in Anspruch 2 vorgeschlagenen Lösung als nachteilig, weil diese Paste nach der Durchführung des Prüfvorgangs wieder entfernt werden muss, was im laufenden Produktionsprozess Zeit kostet. Weiterhin bringt die Notwendigkeit der mechanischen Ankopplung Nachteile mit sich wegen der Rauhigkeit der Oberfläche der Gussteile, die eine definierte mechanische Ankopplung schwierig macht.

Weiterhin kann eine Ultraschallprüfung in einem Wasserbad vorgenommen werden. Auch wenn hier die unmittelbare Ankopplung des Ultraschall-Prüfkopfes an das zu prüfende Teil entfällt, ergeben sich dennoch Nachteile in der Handhabung im laufenden Produktionsprozess. Das zu prüfende Teil muss dabei nach dem Eintauchen wieder getrocknet werden.

Während bei einer Prüfung mittels Ultraschall nur eine lokale Prüfung erfolgt, die von dem Erfassungsbereich des Prüfkopfes abhängt, wird bei der Schallprüfung das Teil insgesamt geprüft.

Vorteilhaft erfolgt bei der vorgeschlagenen Lösung die Schallanregung mit einem Anschlaghammer und die Schallaufnahme mit einem Mikrophon, so dass an das Teil kein Prüfkopf mechanisch angebunden sein muss bzw. so dass das Teil nicht in ein Wasserbad getaucht werden muss, um eine Ultraschallprüfung vornehmen zu können.

Gemäß Anspruch 3 wird das aufgenommene Schallspektrum des zu prüfenden Gussteils auf charakteristische Werte untersucht, die aus den Schallspektren eines oder mehrerer fehlerfreier Gussteile abgeleitet werden derart, dass diese charakteristischen Werte in den Schallspektren des fehlerfreien Gussteils bzw. der fehlerfreien Gussteile nur innerhalb bestimmter Grenzen voneinander abweichen.

Vorteilhaft können dabei wieder theoretische Untersuchungen über ein zu erwartendes Schallspektrum vermieden werden. Sofern mehrere fehlerfreie Gussteile verwendet werden, um die charakteristischen Werte festzulegen, können weiterhin Zufälligkeiten bei der Messung einzelner Schallspektren vermieden werden. Dabei kann beispielsweise zunächst das Schallspektrum eines dieser Teile auf das Auftreten von charakteristischen Werten wie beispielsweise bestimmten Mindestenergien (Amplituden) in einzelnen Frequenzbereichen untersucht werden. Weitere charakteristische Werte können gebildet werden, indem nicht nur das Auftreten bestimmter Mindestenergien (Amplituden) in den einzelnen Frequenzbereichen ausgewertet wird, sondern indem in bestimmten Frequenzbereichen der Wert der Energie (Amplitude) ausgewertet wird. Wenn entsprechende charakteristische Werte bei einem der fehlerfreien Teile festgestellt wurden, kann ein Abgleich erfolgen derart, dass ein entsprechender Wert nur dann zur Prüfung von anderen Teilen verwendet wird, wenn dieser charakteristische Wert bei den anderen fehlerfreien Teilen ebenfalls - zumindest innerhalb gewisser Schranken - festgestellt werden konnte.

Bei der Ausgestaltung nach Anspruch 4 erfolgt weiterhin eine Längenmessung mittels eines oder mehrerer Laserpaare.

Diese Längenmessung ist vergleichsweise einfach durchzuführen. Vorteilhaft können dadurch weitere Fehler bei der Fertigung erkannt werden.

Insbesondere erweist es sich als vorteilhaft bei der Kombination mehrerer Prüfschritte, dass durch eine kombinierte Auswertung in den einzelnen Prüfschritten eine Eingrenzung von verschiedener Fehlerquellen möglich ist.

Ein Ausführungsbeispiel der Erfindung ist in der Zeichnung dargestellt.

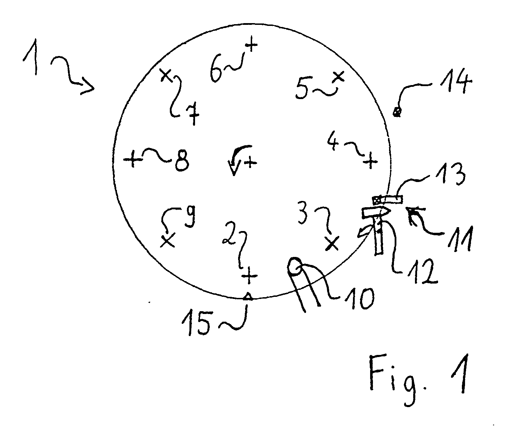

Figur 1 zeigt ein Ausführungsbeispiel eines Rundtakttisches 1 mit acht Positionen 2, 3, 4, 5, 6, 7, 8, 9, an denen jeweils ein zu fertigendes Teil platzierbar ist.

Es ist dabei ersichtlich, dass anstelle des Rundtakttisches auch ein linearer Ablauf des Produktionsprozesses realisiert sein kann.

Der Rundtaktisch 1 weist vorteilhaft eine Markierung 15 auf, mittels der insbesondere bei der Wirbelstromprüfung die absolute Winkelstellung des Rundtakttisches 1 erkannt werden kann. Dies kann erkannt werden, indem die Markierung 15 ein charakteristisches Signal bei der Wirbelstromprüfung erzeugt. Sobald also dieses charakteristische Signal auftritt, kann erkannt werden, dass sich die Markierung 15 an der Position der Wirbelstromprüfung befindet. Die absolute Winkelstellung kann dann erkannt werden, indem von der erkannten Position der Markierung 15 die Änderung des Drehwinkels des Rundtakttisches 1 bestimmt wird aus der Winkelgeschwindigkeit der Drehung des Rundtakttisches 1.

Es ist auch möglich, die absolute Winkelstellung des Rundtakttisches 1 durch eine andere Signalauswertung auszuwerten, beispielsweise durch eine Markierung, die optisch ausgewertet werden kann oder auch mechanisch.

Ebenso kann die absolute Winkelstellung aus dem Datenbestand eines Prozesssteuersystems erhalten werden.

In dem gezeigten Ausführungsbeispiel der Figur 1 ist eine Spule 10 zu sehen, mittels der die Wirbelstromprüfung vorgenommen wird. An die Spule 10 wird eine Spannung angelegt. Durch die in den einzelnen Teilen induzierten Wirbelströme ändert sich jeweils der Stromverlauf in der Spule 10. Durch die Auswertung dieses Stromverlaufs in der Spule 10 kann also indirekt der Wirbelstrom in dem zu prüfenden Teil gemessen werden.

Um den "Signaluntergrund" zu bestimmen, wird vorteilhaft erst der Verlauf des gemessenen Wirbelstroms über eine Drehung des Rundtakttisches 1 ermittelt. Wenn dann nachfolgend die Wirbelstromverläufe von zu prüfenden Teilen gemessen werden, kann dann der der jeweiligen Winkelstellung des Rundtakttisches 1 entsprechende "Signaluntergrund" abgezogen werden, um den Signalanteil des gemessenen Wirbelstroms zu erhalten, der auf das zu prüfende Teil zurückzuführen ist. In diesem Zusammenhang ist es dann auch wichtig, die absolute Winkelstellung des Rundtakttisches 1 zu kennen.

Vorteilhaft wird bei der Prüfung mittels des Wirbelstromverlaufs der Wirbelstrom über der Zeit aufgenommen, während der das zu prüfende Teil an der Spule 10 vorbei läuft. Es können dann also lokal begrenzte Fehler erkannt werden, die u.U. bei einer Gesamtbetrachtung des Wirbelstromsignals einen vernachlässigbaren Signalanteil liefern würden und somit nicht erkennbar wären, wenn beispielsweise eine Wirbelstrommessung beim ruhenden Teil durchgeführt würde.

Zur Verbesserung der Eingrenzung lokaler Fehler kann dieses Wirbelstromsignal zusätzlich noch Zeitabschnittsweise unterteilt werden, um eine bessere Signalauswertung zu ermöglichen.

Die Auswertung kann beispielsweise erfolgen, indem ein Vergleich zwischen dem gemessenen Wirbelstromsignal und einem Referenzsignal vorgenommen wird. Dabei kann das gemessene Wirbelstromsignal auf eventuelle Abweichungen zu dem Referenzsignal untersucht werden. Das Referenzsignal kann gewonnen werden durch den Wirbelstromverlauf eines als fehlerfrei erkannten Referenzteils. Ebenso können Wirbelstrommessungen mehrerer als fehlerfrei erkannter Referenzteile berücksichtigt werden, indem beispielsweise Mittelwerte dieser Signale gebildet werden.

Weiterhin ist zu sehen, dass eine akustische Prüfung erfolgt. Dabei werden die zu prüfenden Teile mit einem Hammer 12 angeschlagen mit einer definierten Kraft angeschlagen. Da die Winkelstellung des Rundtakttisches 1 bekannt ist, und die zu prüfenden Teile auch mit einer definierten Orientierung an den entsprechenden Positionen auf den Rundtakttisch 1 aufgelegt werden, können die zu prüfenden Teile auch an einer definierten Stelle angeschlagen werden. Es ist weiterhin ein frei hängendes Mikrophon 13 zu sehen, mit dem das Schallsignal aufgenommen werden kann.

Auch hier kann wieder ein Vergleich des gemessenen Schallsignals eines zu prüfenden Teils mit einem Referenzsignal erfolgen. Das Referenzsignal kann wieder als Mittelwert von mehreren als fehlerfrei erkannten Referenzteilen gewonnen werden. Das Schallsignal kann beispielsweise auf das Auftreten charakteristischer Energieanteile in bestimmten Frequenzintervallen untersucht werden. Dabei können diese Energieanteile beispielsweise nur dann als charakteristische Größe verwendet werden, wenn diese bei allen als fehlerfrei erkannten Teilen aufgetreten sind.

Dabei erweist es sich als vorteilhaft, dass ein frei hängendes Mikrophon verwendet werden kann. Es ist dann vorteilhaft nicht notwendig, das Mikrophon akustisch an das zu prüfende Teil anzukoppeln. Damit kann im laufenden Produktionsprozess Zeit gespart werden.

Weiterhin ist eine Lichtquelle 14 zu sehen, die beispielsweise durch ein Laserpaar gebildet werden kann. Mittels dieses Laserpaars kann eine Längenmessung der zu prüfenden Bauteile vorgenommen werden.

Dabei kann auch eine Erkennung von Rechts- und Linksteilen vorgenommen werden, soweit diese in einem einheitlichen Produktionsprozess und nicht von vorne herein in verschiedenen Produktionslinien hergestellt werden. Mit dieser Rechts- Linkserkennung kann auch eine Aussortierung verbunden sein.

Es ist auch möglich, lediglich einzelne der beschriebenen Prüfschritte vorzusehen. Ebenso können auch Fehler eingegrenzt werden durch eine kombinierte Auswertung von Fehlern, die in den einzelnen Prüfschritten erkannt wurden.

Alternativ oder zusätzlich ist es auch möglich, die zu prüfenden Teile mechanisch abzutasten, um eventuelle Anlagerungen erkennen zu können. Dies kann gegebenenfalls auch durch eine optische Kontrolle mittels einer Kamera durchgeführt werden. Bei einer Kontrolle mittels einer Kamera können auch durch eine Erfassung des Gesamtobjektes eventuelle Geometrieänderungen erfasst werden.

## Patentansprüche

1. Verfahren zur Qualitätsprüfung von Gussteilen, wobei eine Wirbelstromprüfung der Gussteile erfolgt (10) wobei die Wirbelstromprüfung durchgeführt wird, indem die Gussteile während der Wirbelstromprüfung (10) durch ein Magnetfeld bewegt werden,
**dadurch gekennzeichnet, dass** zunächst ein als fehlerfrei erkanntes Teil oder mehrere als fehlerfrei erkannte Teile durch das Magnetfeld bewegt werden, wobei der Verlauf des bei diesen fehlerfreien Teilen bzw. diesem fehlerfreien Teil gemessenen Wirbelstromes erfasst wird, und dass nachfolgend ein zu prüfendes Teil durch das Magnetfeld bewegt wird, wobei der Verlauf des bei diesem zu prüfenden Teil gemessenen Wirbelstromes erfasst wird, wobei eine Fehlererkennung erfolgt, wenn der Verlauf des Wirbelstromes bei dem zu prüfenden Teil um mehr als einen Schwellwert von dem Verlauf des Wirbelstromes bei dem fehlerfreien Teil bzw. dem Verlauf der Wirbelströme bei den fehlerfreien Teilen abweicht, wobei der Verlauf des Wirbelstromes bei dem fehlerfreien Teil bzw. den fehlerfreien Teilen wie auch bei dem zu prüfenden Teil Zeitabschnittsweise unterteilt wird, wobei die Prüfung auf die Abweichung jeweils Zeitabschnittsweise erfolgt und dass die Bewegung der Gussteile durch das Magnetfeld einer Bewegung in Förderrichtung des Produktionsprozesses entspricht.

2. Verfahren nach Anspruch 1,
**dadurch gekennzeichnet, dass** eine Schallprüfung der Gussteile erfolgt, indem die Gussteile mit einem Anschlaghammer (12) mit einer definierten Kraft an einer definierten Stelle des Gussteils angeschlagen werden und indem der resultierende Klang mittels eines Mikrophons (11) aufgenommen wird, das nicht mechanisch an das Gussteil angekoppelt ist.

3. Verfahren nach Anspruch 2,
**dadurch gekennzeichnet, dass** das aufgenommene Schallspektrum des zu prüfenden Gussteils auf charakteristische Werte untersucht wird, die aus den Schallspektren mehrerer fehlerfreier Gussteile abgeleitet werden derart, dass diese charakteristischen Werte in den Schallspektren der fehlerfreien Gussteile nur innerhalb bestimmter Grenzen voneinander abweichen.

4. Verfahren nach einem der Ansprüche 1 bis 3,
**dadurch gekennzeichnet, dass** eine Längenmessung mittels eines oder mehrerer Laserpaare erfolgt (14).

## Claims

1. Method for quality control of castings, in which the castings are subjected to eddy current testing (10), said eddy current testing being carried out by moving the castings through a magnetic field during the eddy current test (10), **characterized in that**, first of all, a casting known to be flawless or a plurality of castings known to be flawless is/are moved through the magnetic field, the signal pattern of the eddy current measured for this/these flawless casting(s) being recorded, and that, subsequently, a casting to be tested is moved through the magnetic field, the signal pattern of the eddy current measured for this test casting being recorded, a flaw being indicated if the signal pattern of the eddy current measured for the test casting deviates by more than a threshold value from the signal pattern of the eddy current measured for the flawless casting or from the signal pattern of the eddy currents measured for the flawless castings, the signal pattern of the eddy current measured for the flawless casting(s) and for the casting under test being sub-divided in time segments, and that the movement of the castings through the magnetic field corresponds to a movement in the transport direction of the production process.

2. The method of claim 1,
**characterised in that** the castings are subjected to a sound test in which the castings are struck with a defined force by a hammer (12) at a defined point on the casting, and in which the resulting sound is recorded by means of a microphone (11) which is not coupled mechanically to the casting.

3. The method of claim 2,
**characterised in that** the recorded sound spectrum of the casting under test is analysed for characteristic values that are derived from the sound spectra of a plurality of flawless castings in such a manner that these characteristic values in the sound spectra of the flawless castings only deviate from each other within given limits.

4. The method according to one of claims 1 to 3,
**characterised in that** a linear measurement is carried out by means of one or more laser pairs (14).

## Revendications

1. Procédé pour le contrôle de qualité de pièces moulées, un contrôle des courants de Foucault de la pièce moulée étant réalisé (10), le contrôle des courants de Foucault étant réalisé en déplaçant la pièce moulée à travers un champ magnétique durant le contrôle des courants de Foucault (10), **caractérisé en ce que** tout d'abord une pièce reconnue comme étant sans défaut ou plusieurs pièces reconnues comme étant sans défaut sont déplacées à travers le champ magnétique, l'évolution des courants de Foucault mesurés avec ces pièces sans défaut ou cette pièce sans défaut est saisie, et **en ce qu'**ensuite une pièce à contrôler est déplacée à travers le champ magnétique, l'évolution des courants de Foucault mesurés avec cette pièce à contrôler est saisie, une reconnaissance de défaut étant réalisée lorsque l'évolution des courants de Foucault de la pièce à contrôler s'écarte de plus qu'une valeur seuil de l'évolution des courants de Foucault avec la pièce sans défaut ou de l'évolution des courants de Foucault avec les pièces sans défaut, l'évolution des courants de Foucault de la pièce sans défaut ou des pièces sans défaut ainsi que celle de la pièce à contrôler étant divisée par intervalles de temps, le contrôle étant réalisé sur la variation par intervalle de temps, et **en ce que** le mouvement de la pièce moulée à travers le champ magnétique correspond à un mouvement du dispositif de convoyage du processus de production.

2. Procédé selon la revendication 1, **caractérisé en ce qu'**un contrôle acoustique de la pièce moulée est réalisé en frappant la pièce moulée avec un marteau de frappe (12) avec une force définie à un endroit défini de la pièce moulée, et en enregistrant le son qui en résulte au moyen d'un microphone (11) qui n'est pas couplé de façon mécanique à la pièce moulée.

3. Procédé selon la revendication 2, **caractérisé en ce que** le spectre acoustique enregistré de la pièce moulée à contrôler est analysé à la recherche de valeurs caractéristiques qui sont déduites des spectres acoustiques de plusieurs pièces moulées sans défaut de telle sorte que ces valeurs caractéristiques dans les spectres acoustiques des pièces moulées sans défaut ne s'écartent les unes des autres que dans une certaine limite.

4. Procédé selon l'une des revendications 1 à 3, **caractérisé en ce qu'**une mesure de longueur est réalisée à l'aide d'une ou plusieurs paires de lasers (14).
